Europäisches Patentamt

European Patent Office

Office européen des brevets

(19)

(11) Veröffentlichungsnummer: 0 000 391
A1

# (12) EUROPÄISCHE PATENTANMELDUNG

(21) Anmeldenummer: 78100351.2

(22) Anmeldetag: 11.07.78

(51) Int. Cl.²: C01B21/00

(30) Priorität: 16.07.77 DE 2732267

(43) Veröffentlichungstag der Anmeldung: 24.01.79
Patentblatt 79/2

(84) Benannte Vertragsstaaten: BE DE FR GB

(71) Anmelder: Bayer Aktiengesellschaft, Zentralbereich
Patente,Marken und Lizenzen Bayerwerk, D-5090
Leverkusen 1 (DE)

(72) Erfinder: Schwarz, Hans-Helmut, Dr., Rather
Strasse 90, D-4150 Krefeld (DE)

(54) Verfahren zur Gewinnung von Distickstoffmonoxid.

(57) Die Erfindung betrifft ein Verfahren zur Gewinnung von Distickstoffmonoxid aus den bei der Oxidation von Cycloalkanolen und/oder Cycloalkanonen mit Salpetersäure entstehenden Oxidationsabgasen, die im wesentlichen aus Distickstoffmonoxid, Stickstoffoxid, Stickstoffdioxid, Stickstoff, Sauerstoff, Kohlenstoffdioxid und Wasserdampf bestehen. Dabei wird zunächst das Gasgemisch von Nebenbestandteilen, wie Stickstoffoxid, Stickstoffdioxid, Kohlenstoffdioxid und Wasser befreit und anschliessend das vorgereinigte Oxidationsabgas auf Drucke im Bereich von 40 bis 300 bar komprimiert und auf Temperaturen im Bereich von 0 bis −88°C abgekühlt. Die entstehende Distickstoffmonoxid enthaltende flüssige Phase wird abgezogen, das verbleibende Gasgemisch durch Entspannen abgekühlt und das abgekühlte von Distickstoffmonoxid weitgehend befreite Gasgemisch zur Kühlung von frischem Oxidationsgas verwendet.

EP 0 000 391 A1

BAYER AKTIENGESELLSCHAFT     5090 Leverkusen, Bayerwerk
Zentralbereich     Bg/AB
Patente, Marken und Lizenzen

## Verfahren zur Gewinnung von Distickstoffmonoxid

Die vorliegende Erfindung betrifft ein Verfahren zur Gewinnung von Distickstoffmonoxid aus den bei der Oxidation von Cycloalkanolen und/oder Cycloalkanonen mit Salpetersäure entstehenden Oxidationsabgasen.

Die bei der Herstellung von Dicarbonsäuren, z.B. Adipinsäure, durch Oxidation der entsprechenden Cycloalkanole und/oder Cycloalkanone entstehenden Oxidationsabgase enthalten neben Distickstoffmonoxid noch andere gasförmige Bestandteile, wie Stickstoffmonoxid, Stickstoffdioxid, Stickstoff, Kohlendioxid und Wasserdampf.

Um das Distickstoffmonoxid, das z.B. als Anästhetikum in großen Mengen Verwendung findet, aus den Abgasen der Cycloalkanol/Cycloalkanon-Oxidation zu gewinnen, kann man die Oxidationsabgase nach Entfernen des größten Teils an Stickstoffmonoxid und Stickstoffdioxid beispielsweise einer Druck-Wäsche unterziehen (CS-PS 153 889 und 161 507).

Le A 18 133 - Ausland

- 2 -

Dieses Verfahren ist jedoch für die Gewinnung von Distickstoffmonoxid weniger geeignet, da das Distickstoffmonoxid nur eine geringe Wasserlöslichkeit besitzt. Selbst unter hohem Druck lösen sich nur wenige Gew.-% Distickstoffmonoxid im Wasser, so daß zur Absorption des Distickstoffmonoxids große Wassermengen benötigt werden. Durch die großen Wassermengen, die z.B. bei Kreislaufführung umgewälzt werden müssen, würde sich ein solches Trennverfahren unwirtschaftlich gestalten.

Es wurde nun ein Verfahren zur Gewinnung von Distickstoffmonoxid aus den bei der Oxidation von Cycloalkanolen und/oder Cycloalkanonen mit Salpetersäure entstehenden Oxidationsabgasen, die im wesentlichen aus Distickstoffmonoxid, Stickstoffmonoxid, Stickstoffdioxid, Stickstoff, Sauerstoff, Kohlenstoffdioxid und Wasserdampf bestehen, gefunden, das dadurch gekennzeichnet ist, daß man das gegebenenfalls von Nebenbestandteilen, wie Stickstoffmonoxid, Stickstoffdioxid und Kohlendioxid befreite Gasgemisch trocknet und anschließend das vorbehandelte Oxidationsabgas auf Drucke im Bereich von 15 bis 300 bar komprimiert und auf Temperaturen im Bereich von 0 bis -88°C abkühlt, die dabei entstehende Distickstoffmonoxid enthaltende flüssige Phase abzieht, das verbleibende Gasgemisch durch Entspannen abkühlt und das abgekühlte von Distickstoffmonoxid weitgehend befreite Gasgemisch zur Kühlung von frischem Oxidationsabgas verwendet.

Die bei der Oxidation von Cycloalkanolen und/oder Cycloalkanonen entstehenden Abgase enthalten im allgemeinen etwa 5 bis 60 Gew.-% Distickstoffmonoxid. Der Rest be-

<u>Le A 18 133</u>

steht überwiegend aus Stickstoff und Sauerstoff (ca. 40 bis 90 Gew.-%) sowie in geringen Mengen aus Stickstoffmonoxid, Stickstoffdioxid, Kohlenstoffdioxid, Wasser u.a. (ca. 60 bis 10 Gew.-%).

Zur Gewinnung von Distickstoffmonoxid ist es zweckmäßig, daß Oxidationsabgas einer Vorreinigung zu unterwerfen.

Der Umfang dieser Vorreinigung richtet sich nach der späteren Verwendung des Distickstoffmonoxids. In allen Fällen ist es notwendig, das Oxydationsabgas zu trocknen. Dies kann durch die in der Technik üblichen Methoden, wie z.B. Absorption an $SiO_2$ und/oder Molekularsieben oder Wäsche mit wasserabsorbierenden Flüssigkeiten sowie Kühlung und Kombination hiervon durchgeführt werden.

Eine weitere Vorreinigung des Oxydationsgases ist erforderlich, wenn das zu gewinnende Distickstoffmonoxid als Anästhetikum verwendet werden soll.

Dabei können die Nebenbestandteile nach bekannten Methoden der Gasreinigung, z.B. durch alkalische oder saure Wäsche oder durch Absorption, aus dem Gasgemisch entfernt werden (vgl. DT-AS 2 040 219).

Wenn für sonstige chemische Verwendung eine sehr hohe Reinheit des Distickstoffmonoxid nicht gefordert wird, kann diese Vorreinigung ganz oder teilweise unterbleiben, da ein Teil der Nebenprodukte durch das erfindungsgemäße Verfahren von Distickstoffmonoxid abgetrennt wird.

Le A 18 133

- 4 -

Das so vorgereinigte Oxydationsabgas, entweder nur
getrocknet oder ganz oder teilweise von den sonstigen
Nebenbestandteilen befreit, im folgenden Ausgangsgasgemisch genannt, wird nun nach dem erfindungsgemäßen
Verfahren auf etwa 15 bis etwa 300 bar, vorzugsweise
auf 25 bis 200 bar, komprimiert. Dabei richtet sich
die Höhe des angelegten Druckes in erster Linie nach
der Distickstoffmonoxid-Konzentration im Gasgemisch
und danach, wie groß der Abscheidungsgrad des Distickstoffmonooxids aus dem Gasgemisch sein soll.
Es gilt hierbei die Regel, daß hohe Abscheidungsraten
an Distickstoffmonoxid durch hohe Drucke erzielt werden
können, auch wenn die ursprüngliche Konzentration an Distickstoffmonoxid im Gasgemisch relativ gering ist. Das
optimale Verhältnis von Druck, Distickstoffmonoxid-Konzentration und Abscheidungsrate an Distickstoffmonoxid läßt
sich leicht durch Vorversuche ermitteln.

Zur Abtrennung des Distickstoffmonoxids aus dem vorgereinigten Oxidationsabgas wird das komprimierte Gasgemisch
auf Temperaturen im Bereich von etwa 0 bis etwa -88°C,
vorzugsweise auf -30 bis -85°C, abgekühlt. Dabei fällt
das Distickstoffmonoxid in flüssiger Form an und kann als
solches entnommen werden. Das zurückbleibende, von Distickstoffmonoxid weitgehend befreite, Restgasgemisch wird
dann zur Kühlung des Ausgangsgasgemisches verwendet.

Die Abkühlung des komprimierten Ausgangsgasgemisches kann
erfindungsgemäß in mehreren Stufen durchgeführt werden.
Dabei kann so vorgegangen werden, daß das von Distickstoffmonoxid weitgehend befreite Restgasgemisch durch Entspannen
abgekühlt und zur Kühlung des komprimierten, von der Oxidation kommenden, vorgereinigten Gasgemisches verwandt
wird. Der Wärmeaustausch erfolgt in üblichen Wärmeaustauschern, vorteilhafterweise im Gegenstromwärmeaustauscher.

Le A 18 133

Der Kühlprozeß läßt sich folgendermaßen beschreiben. Das von Distickstoffmonoxid weitgehend befreite Gasgemisch (Restgasgemisch), das aus der ersten Entspannungstufe kommt, wird in den letzten Wärmetauscher, in dem sich das komprimierte Ausgangsgasgemisch befindet, eingeleitet. Das aus dem letzten Wärmetauscher gelangende nunmehr erwärmte Restgasgemisch wird in einer nächsten Entspannungsstufe erneut entspannt und damit wieder abgekühlt. Es dient dann zur weiteren Kühlung des sich im vorletzten Wärmetauscher befindlichen Ausgangsgasgemisches. Dieser Vorgang kann sich mehrmals wiederholen bis durch den Entspannungsprozeß keine weitere Abkühlung des Restgasgemisches mehr erfolgt.

Wenn preiswerte Kälte zur Verfügung steht, kann diese dem Prozeß durch Zuschaltung einer Kältemaschine zugeführt werden. Auch ist es möglich, die Kälteleistung, die durch die Entspannung erzeugt wird, durch Anwendung einer Entspannungsturbine zu vergrößern.

Erfindungsgemäß wird bei der stufenweisen Entspannung des Restgasgemisches so vorgegangen, daß die Temperatur des Restgasgemisches bei der ersten Entspannung im Bereich von etwa -86°C bis etwa -92°C, vorzugsweise bei -89°C bis -91°C liegt. Bei den folgenden Entspannungsstufen kann die Temperatur um so tiefer sein, je wärmer das zu kühlende Ausgangsgasgemisch an der kältesten Stelle des betreffenden Wärmetauschers ist. Als Regel für die zweckmäßigerweise einzuhaltende Temperatur $T_k$ des entspannten Restgasgemisches kann folgende Formel dienen:

$$T_k = -176 - (T_w). \quad T_k \text{ und } T_w \text{ in } {}^{\circ}C$$

Le A 18 133

wobei

$T_w$ die Temperatur des zu kühlenden Ausgangsgasgemisches an der kältesten Stelle des Wärmetauschers ist.

Das erfindungsgemäße Verfahren kann anhand der Abbildung illustriert werden.

Das vorgereinigte, von der Oxidation der Cycloalkanole und/oder Cycloalkanone kommende Oxidationsabgas wird in einem Kompressor (1) komprimiert und die dabei auftretende Kompressionswärme abgeführt. Das unter Druck stehende Ausgangsgasgemisch durchläuft dann die in Reihe geschalteten Gegenstromwärmetauscher (2) bis (5) und wird dabei auf ca. -85°C abgekühlt. Die in jedem Wärmetauscher (2) bis (5) anfallende flüssige Phase wird dem Sammelgefäß (10) zugeführt. In dem Entspannungsgefäß (6) wird das unter Druck stehende, von Distickstoffmonoxid weitgehend befreite Restgasgemisch so weit entspannt, das die Temperatur in dem Entspannungsgefäß (6) einen Bereich von -88 bis -91°C nicht unterschreitet. Das abgekühlte und teilweise entspannte Restgasgemisch wird dann dem Gegenstromwärmetauscher (5) zugeführt und kühlt dabei das sich in (5) befindliche komprimierte Ausgangsgasgemisch so weit ab, daß sich aus dem Gasgemisch Distickstoffmonoxid abscheidet. Das nunmehr erwärmte Restgasgemisch wird im Entspannungsgefäß (7) wieder entspannt bis auf eine Temperatur, die nach der oben angegebenen Formel bestimmt werden kann. Es folgt erneuter Wärmetausch im Wärmetauscher (4), Entspannung im Entspannungsgefäß (8) und wieder Wärmetausch im Wärmetauscher (2). Die Kälteerzeugung, die man durch Entspannen des komprimierten Gasgemisches gewinnen kann, hängt bekanntlich in erster Linie vom Druck des Gasgemisches ab, wobei noch die Stoffeigenschaften der sich im Gasgemisch befindlichen Stoffe eine Rolle spielen (vgl. R. Plank, Handbuch der Kältetechnik, Band 8, 5-96).

Le A 18 133

- 7 -

Die hier beispielhaft beschriebene Anordnung von mehreren Gegenstromwärmetauschern kann auch so ausgeführt werden, daß in einem Gegenstromwärmetauscher mehrere getrennte Rohrbündel eingebaut sind, die von unterschiedlichen Gasströmen beaufschlagt simultan das Ausgangsgasgemisch abkühlen (s. Beispiel 3).

Man kann davon ausgehen, daß bei Gasgemischen, die etwa 20 Gew.-% Distickstoffmonoxid enthalten, durch eine Komprimierung auf mehr als 200 bar, eine Kälteleistung durch Entspannung gewonnen werden kann, die ausreicht, um den Kältebedarf zur Gewinnung des größten Teiles des Distickstoffmonoxids zu decken. Ist der Kältebedarf größer als er durch den Entspannungsprozeß zur Verfügung gestellt werden kann, so ist es zweckmäßig, den zusätzlichen Kältebedarf durch Verwendung von Kältemaschinen und/oder Entspannungsturbinen zu decken.

So steht beispielsweise der Gegenstromwärmetauscher (3) mit der Kältemaschine (9) in Kontakt. Auch die Entspannungsstufe (8) kann mit Hilfe einer Entspannungsturbine realisiert werden.

Die in den Sammelbehälter (10) gelangende, in den Wärmetauschern (2) bis (5) auskondensierte flüssige Phase besteht im wesentlichen aus Distickstoffmonoxid (ca. 90 bis 99 Gew.-%).

Daneben sind in der flüssigen Phase noch Anteile der Nebenbestandteile (ca. 1 - 10 Gew.-%) gelöst.

**Le A 18 133**

Geht man von einem Ausgangsgemisch aus, das von Stickstoffmonoxid, Stickstoffdioxid und Kohlendioxid befreit wurde, dann enthält die flüssige Phase nur noch Sauerstoff und Stickstoff als Verunreinigung.

Zur Entfernung dieser in der flüssigen Phase gelösten Gase wird in einer Destillationskolonne (11) entspannt und in dieser durch Destillation die flüssige Phase von Sauerstoff und Stickstoff befreit.

Es kann zweckmäßig sein, gegebenenfalls die aus der Destillationskolonne (11) kommenden Dämpfe in den Kondensator (12) nur teilweise zu kondensieren und nur die Restgase über den Kompressor (1) in den Prozeß zurückzuführen. Der Druck wird im allgemeinen in der Destillationskolonne (8) so eingestellt, daß er im Bereich von etwa 1 bis 20 bar, vorzugsweise im Bereich von 5 bis 15 bar, liegt.

Ist das Verfahren darauf abgestellt, nebenprodukthaltige $N_2O$ zu gewinnen, dann kann auf die Destillationskolonne (11) verzichtet und diese durch ein Entspannungsgefäß ersetzt werden. Die hierbei entstehenden Gase können auch über den Kompressor (1) in den Prozeß zurückgeführt werden.

Die Beispiele dienen zur Verdeutlichung des erfindungsgemäßen Verfahrens ohne es jedoch auf diese Beispiele zu beschränken.

Le A 18 133

**Beispiel 1**

100 kg eines Gasgemisches aus $N_2O$, $N_2$ und $O_2$, das 27 Gew.-%
$N_2O$ enthält, werden auf einen Druck von 60 bar komprimiert
und auf eine Temperatur von 30°C gekühlt. Dieses komprimierte Gas wird in 5 hinereinander geschaltete Wärmetauscher gepumpt, in denen es bis auf -85°C abgekühlt wird.
Dabei kondensieren 26,4 kg rohes $N_2O$, das auf den Kopf einer Destillationskolonne gegeben wird, die unter einem
Druck von 15 bar steht. Am Sumpf dieser Kolonne werden
25,4 kg reines Distickstoffoxid abgenommen.

Das aus dem Kopf der Destillationskolonne entweichende
Gas wird dem Prozeß wieder zugeführt.

Das von den flüssigen Anteilen weitgehend befreite Restgasgemisch wird aus dem letzten Wärmetauscher entnommen
und auf 46 bar entspannt. Dabei kühlt es sich auf -90°C
ab. Dieses Gas wird nun zur Gegenstromkühlung des Hochdruckgases im 5. Wärmetauscher benutzt.

Weitere Entspannungen des weitgehend von $N_2O$ befreiten
Restgasgemisches erfolgen beim Übergang vom 5. auf den
4. und vom 3. auf den 1. Wärmetauscher. Die dabei eingestellten Drucke betragen 30, 10 und 1 bar.

An den kalten Enden der Gegenstromwärmetauscher (WMT)
stellten sich im Ausgangsgasgemisch folgende Temperaturen ein:

WMT — 10 —

| WMT | |
|---|---|
| 1 | $5^{o}C$ |
| 2 | $-59^{o}C$ |
| 4 | $-72^{o}C$ |
| 5 | $-85^{o}C$ |

Diesen stehen im Restgasgemisch gegenüber:

| WMT | |
|---|---|
| 1 | $-79^{o}C$ |
| 3 | $-84^{o}C$ |
| 4 | $-82^{o}C$ |
| 5 | $-88^{o}C$ |

In dem 2.Wärmetauscher wird das Gasgemisch durch eine Kältemaschine auf $-55^{o}C$ gekühlt.

## Beispiel 2

Nach dem Verfahren des Beispiels 1 wurde aus 2 weiteren Gasgemischen, die $N_2O$, $O_2$ und $N_2$ enthalten, das Distickstoffoxid abgetrennt. Die folgenden Tabellen liefern die Informationen über die Versuchsparameter:

| | Gasgemisch: | | |
|---|---|---|---|
| | A | B | |
| Gew.-% $N_2O$ | 50,6 | 10 | |
| Druck im Ausgangsgasgemisch | 45 | 150 | bar |
| Zufuhr des Ausgangsgasgemisches | 124 | 100 | kg/h |
| $N_2O$-Menge am Boden der Destillationskolonne | 58 | 8,3 | kg/h |

Le A 18 133

| Austrittstempe-ratur des Restgas-gemisches im letzten Wärmetauscher | -85°C | -75°C | °C |
|---|---|---|---|

Temperaturen und Druck in den Wärmetauschern

| | Gasgemisch A | | | | |
|---|---|---|---|---|---|
| | WMT 1 | 3 | 4 | 5 | |
| Temperatur (kaltes Ende) | | | | | |
| Ausgangsgasgemisch | 20 | -59 | -72 | -81 | °C |
| Restgasgemisch | -78 | -80 | -75 | -83 | °C |
| Druck im Restgasgemisch | 1,3 | 10,1 | 30 | 44 | bar |

| | Gasgemisch B | | | | |
|---|---|---|---|---|---|
| Temperatur im Ausgangs-gasgemisch (kaltes Ende) | 19 | -58 | -66 | -75 | °C |
| Temperatur im Restgasge-misch (kaltes Ende) | -87 | -104 | -86 | -77 | °C |
| Druck im Restgasgemisch | 1 | 14 | 50 | 133 | bar |

Le A 18 133

- 12 -

Beispiel 3

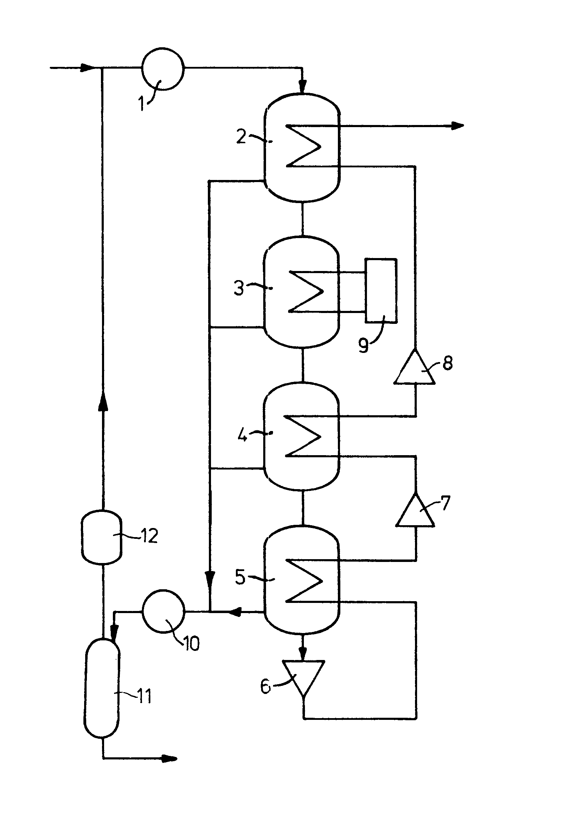

78 kg eines Gasgemisches, das zu 65 Gew.-% aus $N_2O$, 5 % aus $NO_x$, 4 % aus $CO_2$ und 26 % aus Stickstoff besteht, werden auf 27 bar komprimiert und im Wärmetauscher 2 (vgl. Figur 2) mit Hilfe einer Kältemaschine auf -45°C abgekühlt. Die hier entstehende flüssige Phase wird dem Sammelgefäß 10 zugeleitet. Dieses Ausgangsgasgemisch wird im Wärmetauscher 3 weiter abgekühlt. Die dazu notwendige Wärmemenge wird durch mehrstufiges Entspannen des restlichen Ausgangsgasgemisches nach Abtrennung der ausgefallenen flüssigen Phase erzeugt.

Das restliche Ausgangsgemisch tritt mit einer Temperatur von -51°C in das Entspannungsgefäß 6 ein und wird dort auf einem Druck von 14.6 bar entspannt. Es kühlt sich dabei auf -81°C ab. Dieses Gas wird dem Gegenstromwärmetauscher zugeführt. Es wärmt sich dabei auf und wird im Entspannungsgefäß 7 auf 2 bar entspannt. Dabei sinkt die Temperatur auf -80°C. Auch dieser kalte Gasstrom wird dem Wärmetauscher 3 zugeführt.

Die im Sammelgefäß 10 einlaufende Flüssigkeit aus den Wärmetauschern 2 und 3 wird auf Normaldruck entspannt. Die dabei entstehende Gasmenge wird ebenfalls zur Kühlung des Ausgangsgasgemisches im Wärmetauscher 3 benutzt. Dieses $N_2O$-Gasgemisch kann über den Kompressor 1 dem Prozeß wieder zugeführt werden.

Aus dem Sammelgefäß 2 werden 50 kg Distickstoffmonoxid entnommen, das 1,7-Gew.-% $NO_x$ und 5 Gew.-% $CO_2$ enthält.

Le A 18 133

0000391

Patentanspruch

1. Verfahren zur Gewinnung von Distickstoffmonoxid aus den bei der Oxidation von Cycloalkanolen und/oder Cycloalkanonen mit Salpetersäure entstehenden Oxidationsabgasen, die im wesentlichen aus Distickstoffmonoxid, Stickstoffoxid, Stickstoffdioxid, Stickstoff, Sauerstoff, Kohlenstoffdioxid und Wasserdampf bestehen, dadurch gekennzeichnet, daß man das gegebenenfalls von Nebenbestandteilen, wie Stickstoffmonoxid, Stickstoffdioxid und Kohlendioxid befreite Gasgemisch trocknet und anschließend das vorbehandelte Oxidationsabgas auf Drucke im Bereich von 15 bis 300 bar komprimiert und auf Temperaturen im Bereich von 0 bis -88$^{o}$C abkühlt, die dabei entstehende Distickstoffmonoxid enthaltende flüssige Phase abzieht, das verbleibende Gasgemisch durch Entspannen abkühlt und das abgekühlte von Distickstoffmonoxid weitgehend befreite Gasgemisch zur Kühlung von frischem Oxidationsabgas verwendet.

Le A 18 133

# EUROPÄISCHER RECHERCHENBERICHT

Europäisches
Patentamt

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | US - A - 2 850 881 (HAMPTON & CONNOLLY) <br><br> * Spalte 8, Zeilen 17-37, 60-62, Spalte 2, Zeilen 63-72; Spalte 3, Zeilen 1-14 * <br><br>— | 1 | C 01 B 24/00 |
| A | CHEMICAL ABSTRACTS, Vol. 73, Abstr. 68141j (Nakai et al.) 1970 <br> & JA - A - 70 13 446 <br><br>—— | | |

RECHERCHIERTE SACHGEBIETE (Int. Cl.²)

C 01 B 21/00
F 25 J 3/06

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-10-1978 | STEELANDT |

EPA form 1503.1  06.78